# EUROPÄISCHE PATENTSCHRIFT

(11) **EP 1 241 363 B1**
(45) Veröffentlichungstag und Bekanntmachung des Hinweises auf die Patenterteilung: **29.09.2004**
(21) Anmeldenummer: 02002591.2
(22) Anmeldetag: 05.02.2002
(51) Int. Cl.: F16B 27/00

(54) **Magazinierstreifen zur Halterung von Befestigungselementen**
Magazine strip for holding fasteners
Magasin pour le magasinage d'éléments de fixation

(30) Priorität: 07.03.2001 DE 20103989 U
(43) Veröffentlichungstag der Anmeldung: 18.09.2002
(73) Patentinhaber: SFS intec Holding AG, 9435 Heerbrugg (CH)
(72) Erfinder: Sieber, Alex, 9434 Au (CH)
(74) Vertreter: Ludescher, Hans

(56) Entgegenhaltungen:
- DE-A- 3 831 625
- DE-U- 20 002 798
- US-A- 5 779 420
- PATENT ABSTRACTS OF JAPAN vol. 017, no. 256 (M-1413), 20. Mai 1993 (1993-05-20) & JP 04 372373 A (SANTOMI SHIYOUJI KK), 25. Dezember 1992 (1992-12-25)

## Beschreibung

Die Erfindung betrifft einen Magazinierstreifen zur Halterung von Befestigungselementen, insbesondere Schrauben, bei der Lagerung und beim Transport und zur geordneten Zuführung derselben zu einem Setzgerät, bestehend aus einem streifenartigen Aufnahmeteil mit in dessen Längsrichtung aufeinander folgenden Öffnungen zum Einsetzen von Befestigungselementen, wobei durch mehrere von diesen Öffnungen radial wegführende Schlitze abbiegbare Laschen gebildet sind, welche es ermöglichen, das Befestigungselement bei dessen Entnahme aus dem Magazinierstreifen durch den Aufnahmeteil hindurchzudrücken, siehe z.B. DE-A-3 831 625.

Solche Magazinierstreifen werden bisher in der Regel aus Karton gefertigt, da Magazinierstreifen aus diesem Material eine einfache Möglichkeit mit sich bringen, die eingesetzten Befestigungselemente haltenden Laschen derart abzubiegen, dass das Befestigungselement samt einem eventuell vorhandenen grossen Kopf durch den streifenartigen Aufnahmeteil hindurchgedrückt werden kann.

Dabei ist immer von einem Magazinierstreifen mit entsprechend dickerem Material ausgegangen worden, da ja diese um die Öffnungen herum gebildeten Laschen nicht rein durch das Gewicht der Befestigungselemente selbst sich abbiegen dürfen.

Die vorliegende Erfindung hat sich daher zur Aufgabe gestellt, bei einem Magazinierstreifen aus festerem bzw. dickerem Material die Möglichkeit zu schaffen, die Befestigungselemente sicher zu halten und trotzdem eine verbesserte Möglichkeit zu schaffen, die Befestigungselemente durch den streifenartigen Aufnahmeteil hindurch zu entnehmen.

Erfindungsgemäss gelingt dies dadurch, dass die durch die radial von den Öffnungen wegführenden Schlitze gebildeten Laschen an deren freien, zur Öffnung gerichteten Enden dünner ausgebildet sind als der streifenartige Aufnahmeteil.

Es ist dadurch eine Möglichkeit geschaffen worden, dass sich diese Laschen beim Durchdrücken des Befestigungselementes durch den streifenartigen Aufnahmeteil leichter abbiegen können. Es kann daher ein Magazinierstreifen eingesetzt werden, der aus festerem Material gefertigt ist, insbesondere auch bei einem Magazinierstreifen aus Kunststoff. Allein durch die zu den freien Enden der Laschen hin geringer werdende Dicke ist ein einfacheres Abbiegen derselben möglich, ohne dass der Entnahmevorgang der Befestigungselemente gestört wird und ohne dass der Magazinierstreifen selbst derart beschädigt würde, dass er nicht mehr im Setzgerät weiter transportiert werden kann.

Allein schon aus Fertigungsgründen ist es vorteilhaft, dass die Laschen ausgehend von dem streifenartigen Aufnahmeteil in Richtung deren freies Ende hin, also in Richtung zur jeweils zugeordneten Öffnung hin, kontinuierlich dünner werdend ausgeführt sind. Es wird dadurch kontinuierlich die Elastizität der Laschen radial nach aussen gesehen verringert, wobei diese Elastizitätsverringerung auch noch dadurch verstärkt wird, als die Laschen ja mit zunehmendem radialem Abstand von der mittigen Öffnung breiter werden. Es ist durch diese Konstruktion aber auch gewährleistet, dass gerade die unmittelbar die Öffnungen umgebenden Bereiche der Laschen relativ dünn ausgeführt sind, sodass beim Einsetzen der Befestigungselemente diese Bereiche satt anliegen können und sich gegebenenfalls auch sehr leicht einer entsprechenden Oberflächengestaltung, z.B. einem auf dem Befestigungselement vorgesehenen Gewinde, anpassen können.

Eine vorteilhafte Ausgestaltung liegt ferner darin, dass die Dicke des freien Endes der Laschen am einen Ende des streifenförmigen Aufnahmeteiles am grössten ist und in Richtung zum anderen Ende des Aufnahmeteiles abnimmt. Gerade dann, wenn ein Magazinierstreifen aus Kunststoff, und hier beispielsweise in einem Spritzgiessverfahren, hergestellt wird, ergibt sich dadurch ein wesentlich besserer Materialfluss, je nach dem, von welcher Seite her der Spritzvorgang durchgeführt wird. Es ist also gerade durch die Möglichkeit der unterschiedlichen Gestaltung der Dicke der freien Enden der Laschen auch bei der Fertigung eine vorteilhafte Konstruktion möglich.

Weiters wird vorgeschlagen, dass die Dicke des freien Endes der Laschen gleich oder kleiner als die halbe Dicke des Aufnahmeteiles ausgeführt ist. Es ist also ein sehr wesentlicher Unterschied der Dicke des freien Endes der Laschen gegenüber der Dicke des Aufnahmeteiles gegeben, sodass optimale Verhältnisse beim Einsetzen und auch bei der Entnahme von Befestigungselementen gegeben sind. Es wird damit eine sehr wesentliche Verbesserung der Abbiegbarkeit der Laschen geschaffen gegenüber durchgehend gleich dicken Aufnahmeteilen, wenn also auch die Laschen selbst über ihre ganze Ausdehnung gleich dick wie der Aufnahmeteil ausgebildet wären.

Eine weitere vorteilhafte Massnahme liegt darin, dass die Breite der Schlitze von den Öffnungen ausgehend in Richtung deren Ende hin stetig zunimmt. Es wird dadurch eine zusätzliche Verbesserung der Abbiegbarkeit der Laschen geschaffen, da einerseits eine Verringerung der Breite am Fussteil der Laschen erreicht wird und andererseits eine bessere Abbiegbarkeit erzielt wird, ohne dass sich die aufeinander folgenden Laschen gegenseitig berühren könnten.

Um zusätzlich ein Aussreissen bzw. Abbrechen des Aufnahmeteiles beim Abbiegen der Laschen zu verhindern, wird vorgeschlagen, dass die radial aussen liegenden Enden der Schlitze einen bogenförmigen Abschluss aufweisen. Es wird dadurch gerade in diesem Bereich keine Kante gebildet, welche infolge der Kerbwirkung zu Einrissen führen könnte.

Vorteilhaft ist weiters, dass die Begrenzungsflächen der Schlitze spitzwinklig geneigt verlaufen, sodass die Breite der Schlitze von der Oberseite des Aufnahmeteiles ausgehend zur Unterseite des Aufnahmeteile zunimmt. Dies ist eine gerade bei der Herstellung als Kunststoffspritzgussteil sehr vorteilhafte Massnahme.

Der erfindungsgemässe Magazinierstreifen könnte aus Karton gefertigt werden, wobei dann bei der Herstellung auf die besonderen konstruktiven Massnahmen mit den sich zu den Öffnungen hin verjüngenden Laschen einzuhalten sind. Solche Massnahmen könnten zusammen mit dem Stanzvorgang bewerkstelligt werden.

Im Rahmen der Erfindung ist es aber auch denkbar, dass der Magazinstreifen aus einem Kunststoffmaterial gefertigt ist. Bei der Herstellung aus einem Kunststoffmaterial können ebenso in einfacher Weise besondere konstruktive Massnahmen, wie eben die verschiedene Dicke der Laschen bewerkstelligt werden.

In diesem Zusammenhang ist es als vorteilhafte Massnahme anzusehen, wenn der Magazinierstreifen in einem Spritzgiessverfahren aus einem Kunststoffmaterial gefertigt ist. Gerade dann können die verschiedenen Möglichkeiten des Materialflusses und der verschieden dicken Abschnitte bestens berücksichtigt werden.

Im Rahmen der Erfindung ist es aber auch denkbar, den Magazinierstreifen aus Blech zu fertigen. Auch in einem solchen Falle kann durch entsprechenden Press- und Stanzvorgang eine Verwirklichung der konstruktiven Massnahmen mit zum freien Ende hin dünner werdenden Laschen erreicht werden. Eine weitere konstruktive Ausgestaltung des Magazinierstreifens liegt darin, dass der streifenförmige Aufnahmeteil an seinem in Einschubrichtung in ein Setzgerät rückwärtigen Ende an einer oder an beiden Längsbegrenzungen abbiegbare Stege aufweist. Durch diese abbiegbaren Stege wird eine Art Transport- und Führungselement geschaffen, welches sich ausschliesslich beim Einsatz in ein entsprechendes Setzgerät auswirkt. Einen solchen abbiegbaren Steg oder entsprechend abbiegbare Stege können bei jeder Art Material, welches bei der Herstellung des Magazinierstreifens eingesetzt worden ist, vorgesehen werden.

In diesem Zusammenhang ist es vorteilhaft, wenn zwischen Aufnahmeteil und Steg an der Unterseite des Magazinierstreifens eine Abbiegeeinkerbung ausgebildet ist, wobei die Dicke des verbleibenden Verbindungsmaterials etwa der 0,1- bis 0,2-fachen Dicke des Aufnahmeteiles entspricht. Es ist dadurch eine leichte Abbiegung des Steges möglich, selbst wenn der Magazinierstreifen aus Kunststoff oder einem relativ festen Karton oder aus Blech gebildet ist. Es ist dadurch auch gewährleistet, dass nach dem Abbiegen des Steges dieser inetwa in der abgebogenen Stellung verbleibt.

Da der Steg zum Abbiegen in die gewünschte, im wesentlichen rechtwinklig zum Aufnahmeteil abgebogene Stellung vorerst um einen Bereich von mehr als 90° abgebogen werden muss, ist es vorteilhaft, wenn die zwischen Aufnahmeteil und Steg an der Unterseite des Magazinierstreifens ausgebildete Abbiegeeinkerbung einen Öffnungswinkel von etwa 130° aufweist. Der Steg kann also entsprechend weit abgebogen werden, wobei dieser ein entsprechendes Mass wieder zurückgeführt wird und in dieser dann entsprechend ausgerichteten Stellung verbleibt.

Weitere erfindungsgemässe Merkmale und besondere Vorteile werden in der nachstehenden Beschreibung anhand der Zeichnungen noch näher erläutert. Es zeigen:
Fig. 1 eine Draufsicht auf einen Magazinierstreifen;
Fig. 2 eine Seitenansicht des Magazinierstreifens;
Fig. 3 eine Ansicht des Magazinierstreifens in Pfeilrichtung III in Fig. 1, gegenüber Fig. 1 vergrössert dargestellt;
Fig. 4 einen Schnitt nach der Linie IV-IV in Fig. 1, gegenüber in Fig. 1 vergrössert dargestellt;
Fig. 5 eine vergrösserte Darstellung aus der Draufsicht auf den Magazinierstreifen gemäss Fig. 1;
Fig. 6 einen Schnitt nach der Linie VI-VI in Fig. 5

Der in den Zeichnungen dargestellte Magazinierstreifen 1 ist mit einer Vielzahl von Öffnungen 2 versehen, welche zur Aufnahme von Befestigungselementen, insbesondere Schrauben dienen. Beispielsweise beim Einsatz von Schrauben greifen diese mit ihrem Kerndurchmesser in die Öffnungen 2 ein, sodass die die Öffnungen 2 umgebenden Bereiche in die Gewindegänge der Schrauben eingreifen. Diese Befestigungselemente sollen im Magazinierstreifen 1 zum Zwecke der Lagerung und zum Transport eingesetzt werden. Insbesondere sind diese Magazinierstreifen natürlich dazu da, eingesetzte Befestigungselemente geordnet einem Setzgerät zuzuführen, wobei die Befestigungselemente beim Erfassen durch das Setzgerät durch den Magazinierstreifen hindurch zur Befestigungsstelle geführt werden.

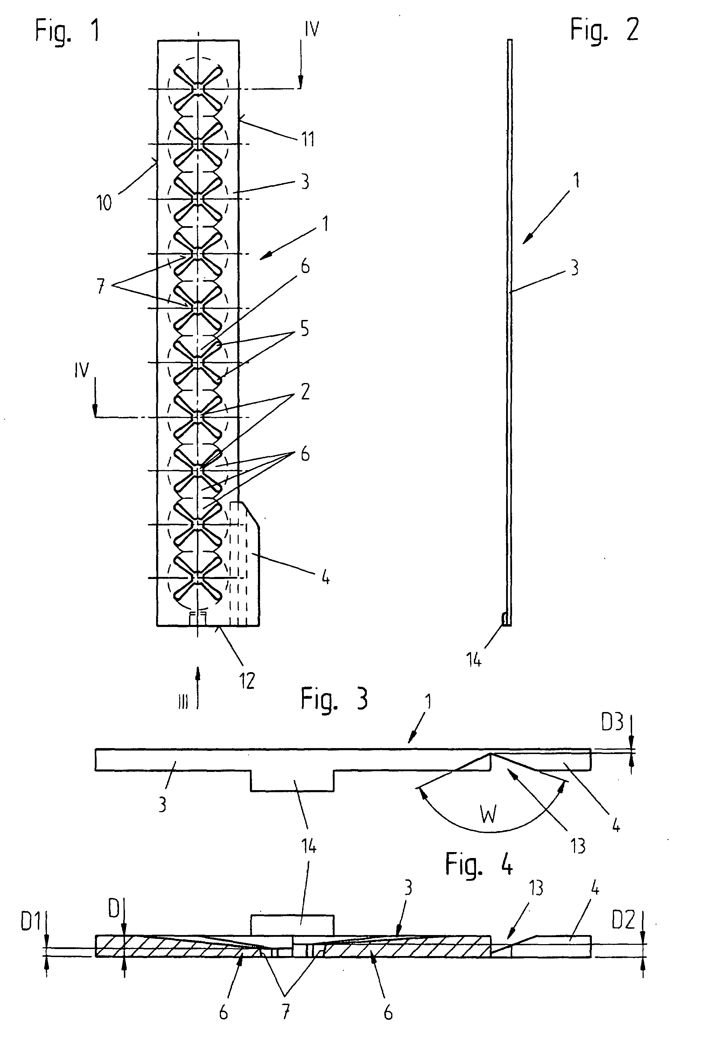

Es müssen also in dem Magazinierstreifen entsprechende Möglichkeiten geschaffen werden, damit das Befestigungselement, beispielsweise eine Schraube, samt dem Kopf durch den Magazinierstreifen hindurchgedrückt werden kann. Ausserdem soll ja der Magazinierstreifen durch dieses Hindurchdrücken nicht zerstört werden. Da auf einem Magazinierstreifen (beispielsweise gemäss Fig. 1) zehn Befestigungselemente, insbesondere Schrauben angeordnet sind, soll ja der Magazinierstreifen bis zum endgültigen Setzen des letzten Befestigungselementes nicht zerstört werden und vorallem im Setzgerät ungestört verschoben werden können.

Der Magazinierstreifen 1 besteht aus einem streifenförmigen Aufnahmeteil 3 und einem abbiegbaren Steg 4. Die konstruktive Gestaltung des Steges 4 und dessen besondere Anordnung wird später noch näher erläutert.

In dem streifenartigen Aufnahmeteil 3 sind also in dessen Längsrichtung mit Abstand aufeinander folgende Öffnungen 2 vorhanden, welche zum Einsetzen von Befestigungselementen dienen. Von den Öffnungen 2 führen mehrere Schlitze 5 radial weg, wobei zwischen diesen Schlitzen 5 abbiegbare Laschen 6 gebildet werden. Diese abbiegbaren Laschen 6 ermöglichen es, das Befestigungselement bei dessen Entnahme aus dem Magazinierstreifen durch den Aufnahmeteil 3 hindurchzudrücken.

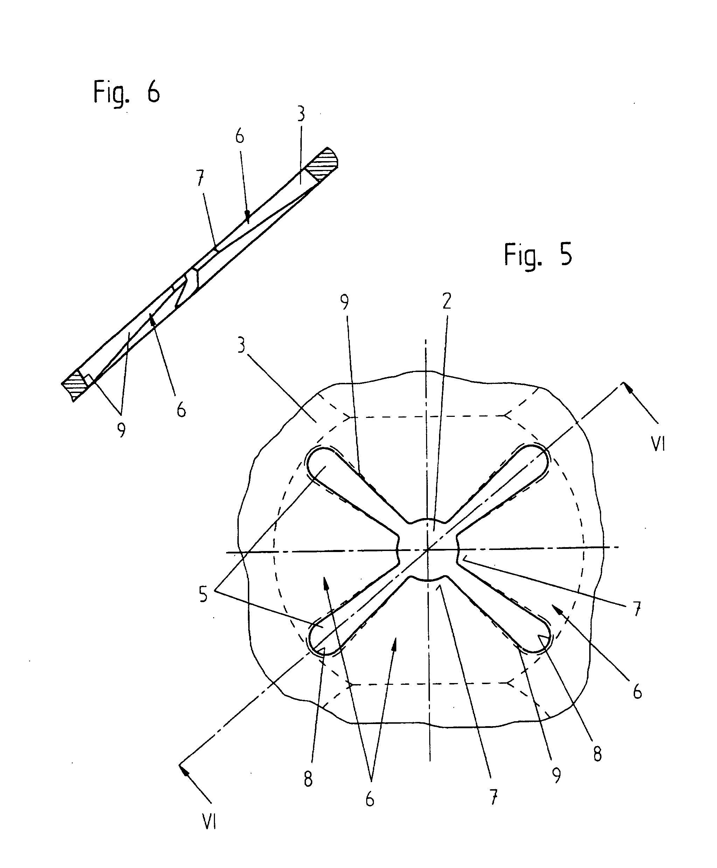

Die besondere Massnahme bei der Ausgestaltung nach der vorliegenden Erfindung liegt darin, dass die zwischen jeweils zwei Schlitzen 5 gebildeten Laschen 6 an deren freien, zur Öffnung 2 gerichteten Enden 7 dünner ausgebildet sind als der streifenartige Aufnahmeteil 3. Dabei ist vorgesehen, wie dies insbesondere den Fig. 4 und Fig. 6 entnommen werden kann, die Laschen 6 ausgehend von dem streifenartigen Aufnahmeteil 3 in Richtung deren freies Ende 7 hin, also in Richtung zur jeweils zugeordneten Öffnung 2 hin, kontinuierlich dünner werdend auszuführen. Die Dicke D1 und D2 des freien Endes 7 der Laschen 6 ist am einen Ende des streifenförmigen Aufnahmeteiles 3 am grössten und nimmt in Richtung zum anderen Ende des Aufnahmeteiles 3 ab. Dies ist besonders deutlich dem Schnitt nach Fig. 4 zu entnehmen. Beispielsweise beträgt die Dicke D1 0,4 mm und die Dicke D2 0,5 mm, wenn beispielsweise die Dicke D des streifenartigen Aufnahmeteiles 3 1,0 mm beträgt. Es ist daraus auch ersichtlich, dass vorteilhafterweise die Dicke D1 bzw. D2 des freien Endes 7 der Laschen 6 gleich oder kleiner ist als die halbe Dicke D des Aufnahmeteiles 3.

Diese konstruktiven Massnahmen können in gleicher Weise beim Magazinierstreifen eingesetzt werden, die aus Karton, aus Kunststoff oder aus Blech gefertigt sind. Je nach Art des Materials sind natürlich auch andere Arbeitsverfahren einzusetzen, um zu diesen konstruktiven Details zu gelangen. Die vorteilhafteste Massnahme ist natürlich die Ausbildung aus Kunststoff, wobei insbesondere die Fertigung in einem Spritzgiessverfahren zweckmässig ist.

Die Schlitze 5 werden ausgehend von den Öffnungen 2 zu deren Ende hin stetig verbreitert ausgeführt, wobei vorteilhaft die radial aussen liegenden Enden der Schlitze 5 einen bogenförmigen Abschluss 8 aufweisen. Insbesondere den Fig. 5 und Fig. 6 ist zu entnehmen, dass die Begrenzungsflächen 9 der Schlitze 5 spitzwinklig geneigt verlaufen, sodass die Breite der Schlitze 5 von der Oberseite des Aufnahmeteiles 3 ausgehend zur Unterseite des Aufnahmeteiles 3 hin zunimmt. Dies ist jedoch insbesondere aus Fertigungsgründen bei der Herstellung aus Kunststoff von besonderem Vorteil.

Wie schon erwähnt, weist der streifenförmige Aufnahmeteil an seinem in Einschubrichtung in ein Setzgerät rückwärtigen Ende einen abbiegbaren Steg 4 auf. Es ist dabei auch denkbar, dass an beiden Längsbegrenzungen 10 und 11 des Aufnahmeteiles 3 solche abbiegbaren Stege vorhanden sind. Es reicht jedoch in der Regel aus, lediglich an einer Längsbegrenzung 11 einen solchen abbiegbaren Steg 4 vorzusehen. Der Steg 4 ist dabei ausgehend vom einen Ende 12 des Magazinierstreifen über wenigstens den Bereich von zwei Aufnahmeabschnitten für Befestigungselemente, also zwei Öffnungen 2 mit entsprechenden Laschen 6 geführt. Dieser Steg 4 dient ja in der Regel zum Transport des Magazinierstreifens 1 im Zusammenwirken mit entsprechenden Mitteln innerhalb des Setzgerätes. Zwischen dem Aufnahmeteil 3 und dem Steg 4 ist an der Unterseite des Magazinierstreifens 1 eine Abbiegeeinkerbung 13 ausgebildet, wobei die Dicke D3 des verbleibenden Verbindungsmaterials etwa der 0,1- bis 0,2-fachen Dicke D des Aufnahmeteiles 3 entspricht. Es ist also eine ausreichende Abbiegemöglichkeit geschaffen worden, wobei gerade bei einer solchen Dicke des verbleibenden Verbindungsmaterials gewährleistet ist, dass der abgebogene Steg in etwa in der abgebogenen Winkelstellung verbleibt. Dazu trägt auch bei, dass der Steg 4 beim Abbiegen über einen Winkel von 90° hinaus abgebogen werden kann, da ein geringfügiges Zurückfedern gegeben ist. Es wird daher vorgesehen, dass zwischen dem Aufnahmeteil 3 und dem Steg 4 an der Unterseite des Magazinierstreifens 1 im Bereich der Abbiegeeinkerbung 13 ein Öffnungswinkel W von etwa 130° vorgesehen ist.

An dem rückwärtigen Ende 12 des Magazinierstreifens 1 und an der Unterseite desselben ist ferner ein nasenartiger Fortsatz 14 ausgebildet, der einerseits die Handhabung des Magazinierstreifens erleichtern kann und andererseits auch für Transportzwecke in einem Setzgerät herangezogen werden kann.

Im Rahmen der Erfindung ist es noch als besonderes vorteilhaft anzusehen, dass die Öffnung 2 im Wesentlichen kreisförmig ausgebildet ist, wobei der Durchmesser dieses Kreises im Wesentlichen dem Kerndurchmesser einer einzusetzenden Schraube entspricht. Es ist also eine satte Anlage der freien Enden 7 der Laschen 6 am Schraubenkern gegeben, ohne dass dadurch bereits die Laschen 6 abgebogen würden. Durch die relativ leichte Verschwenkmöglichkeit infolge der dünneren Ausbildung des freien Endes 7 der Laschen 6 können sich die freien Enden 7 der Laschen 6 an den Gewindeverlauf des eingesetzten Befestigers anpassen. Es ist daher gerade hier insofern eine besonderes gute Halterung der Schrauben möglich, weil diese in die Öffnungen 2 eben hart an der Schraube hineingedreht werden können. Es ist daher nicht nur eine optimale Halterung für die Lagerung und den Transport möglich, sondern auch eine Optimierung der Zuführung im Setzgerät und insbesondere eine optimale Ausrichtung der in den Magazinierstreifen eingesetzten Schrauben innerhalb des Setzgerätes ermöglicht worden.

In diesem Zusammenhang ist es noch vorteilhaft, wenn die die Öffnungen 2 begrenzenden Abschnitte der Laschen 6 ebenfalls bogenförmig in die Begrenzungsflächen 9 der Schlitze 5 übergehen, sodass hier keine scharfkantigen Abschnitte vorhanden sind.

## Patentansprüche

1. Magazinierstreifen (1) zur Halterung von Befestigungselementen, insbesondere Schrauben, bei der Lagerung und beim Transport und zur geordneten Zuführung derselben zu einem Setzgerät, bestehend aus einem streifenartigen Aufnahmeteil (3) mit in dessen Längsrichtung aufeinander folgenden Öffnungen (2) zum Einsetzen von Befestigungselementen, wobei durch mehrere von diesen Öffnungen (2) radial wegführende Schlitze (5) abbiegbare Laschen (6) gebildet sind, welche es ermöglichen, das Befestigungselement bei dessen Entnahme aus dem Magazinierstreifen (1) durch den Aufnahmeteil (3) hindurchzudrücken, **dadurch gekennzeichnet, dass** die durch die radial von den Öffnungen (2) wegführenden Schlitze (5) gebildeten Laschen (6) an deren freien, zur Öffnung (2) gerichteten Enden (7) dünner ausgebildet sind als der streifenartige Aufnahmeteil (3).

2. Magazinierstreifen nach Anspruch 1, **dadurch gekennzeichnet, dass** die Laschen (6) ausgehend von dem streifenartigen Aufnahmeteil (3) in Richtung deren freies Ende (7) hin, also in Richtung zur jeweils zugeordneten Öffnung (2) hin, kontinuierlich dünner werdend ausgeführt sind.

3. Magazinierstreifen nach Anspruch 1 und 2, **dadurch gekennzeichnet, dass** die Dicke (D1, D2) des freien Endes (7) der Laschen (6) am einen Ende des streifenförmigen Aufnahmeteiles (3) am grössten ist und in Richtung zum anderen Ende des Aufnahmeteiles (3) abnimmt.

4. Magazinierstreifen nach Anspruch 3, **dadurch gekennzeichnet, dass** die Dicke (D1, D2) des freien Endes (7) der Laschen (6) gleich oder kleiner als die halbe Dicke (D) des Aufnahmeteiles (3) ausgeführt ist.

5. Magazinierstreifen nach Anspruch 1, **dadurch gekennzeichnet, dass** die Breite der Schlitze (5) von den Öffnungen (2) ausgehend in Richtung deren Ende hin stetig zunimmt.

6. Magazinierstreifen nach Anspruch 5, **dadurch gekennzeichnet, dass** die radial aussen liegenden Enden der Schlitze (5) einen bogenförmigen Abschluss (8) aufweisen.

7. Magazinierstreifen nach den Ansprüchen 1, 5 und 6, **dadurch gekennzeichnet, dass** die Begrenzungsflächen (9) der Schlitze (5) spitzwinklig geneigt verlaufen, so dass die Breite der Schlitze (5) von der Oberseite des Aufnahmeteiles (3) ausgehend zur Unterseite des Aufnahmeteiles (3) zunimmt.

8. Magazinierstreifen nach den Ansprüchen 1 bis 7, **dadurch gekennzeichnet, dass** dieser aus Karton gefertigt ist.

9. Magazinierstreifen nach den Ansprüchen 1 bis 7, **dadurch gekennzeichnet, dass** dieser aus einem Kunststoffmaterial gefertigt ist.

10. Magazinierstreifen nach den Anspruch 9, **dadurch gekennzeichnet, dass** dieser in einem Spritzgiessverfahren aus einem Kunststoffmaterial gefertigt ist.

11. Magazinierstreifen nach den Ansprüchen 1 bis 7, **dadurch gekennzeichnet, dass** dieser aus einem Blech gefertigt ist.

12. Magazinierstreifen nach den Ansprüchen 1 bis 11, **dadurch gekennzeichnet, dass** der streifenförmige Aufnahmeteil (3) an seinem in Einschubrichtung in ein Setzgerät rückwärtigen Ende (12) an einer oder an beiden Längsbegrenzungen (10, 11) abbiegbare Stege (4) aufweist.

13. Magazinierstreifen nach Anspruch 12, **dadurch gekennzeichnet, dass** zwischen Aufnahmeteil (3) und Steg (4) an der Unterseite des Magazinierstreifens (1) eine Abbiegeeinkerbung (13) ausgebildet ist, wobei die Dicke (D3) des verbleibenden Verbindungsmaterials etwa der 0,1- bis 0,2-fachen Dicke (D) des Aufnahmeteiles (3) entspricht.

14. Magazinierstreifen nach Anspruch 11, **dadurch gekennzeichnet, dass** die zwischen Aufnahmeteil (3) und Steg (4) an der Unterseite des Magazinierstreifens ausgebildete Abbiegeeinkerbung (13) einen Öffnungswinkel (W) von etwa 130° aufweist.

## Claims

1. A magazine strip (1) for retaining fastening elements, in particular screws, in storage and transportation and for the ordered feed thereof to a setting implement, comprising a strip-like mounting part (3) with openings (2) succeeding one another in its longitudinal direction for the insertion of fastening elements, wherein deflectable tabs (6) are formed by a plurality of slits (5) extending radially away from these openings (2), which tabs enable the fastening element to be pressed through the mounting part (3) when it is being removed from the magazine strip (1), **characterised in that** the tabs (6) formed by the slits (5) extending radially away from the openings (2) are designed to be thinner at their free ends (7) directed towards the opening (2) than the strip-like mounting part (3).

2. A magazine strip according to Claim 1, **characterised in that** starting from the strip-like mounting part (3) the tabs (6) are designed to become continuously thinner towards their free end (7), i.e. towards the respectively associated opening (2).

3. A magazine strip according to Claims 1 and 2, **characterised in that** the thickness (D1,D2) of the free end (7) of the tabs (6) is at its maximum at one end of the strip-like mounting part (3) and decreases towards the other end of the mounting part (3).

4. A magazine strip according to Claim 3, **characterised in that** the thickness (D1,D2) of the free end (7) of the tabs (6) is equal to or smaller than the half thickness (D) of the mounting part (3).

5. A magazine strip according to Claim 1, **characterised in that** the width of the slits (5) increases continuously towards their ends from the openings (2).

6. A magazine strip according to Claim 5, **characterised in that** the radially outerlying ends of the slits (5) have an arcuate termination (8).

7. A magazine strip according to Claims 1, 5 and 6, **characterised in that** the boundary surfaces (9) of the slits extend inclined at an acute angle so that the width of the slits (5) increases from the upper side of the mounting part (3) towards the underside of the mounting part (3).

8. A magazine strip according to Claims 1 to 7, **characterised in that** it is produced from cardboard.

9. A magazine strip according to Claims 1 to 7, **characterised in that** it is produced from a plastics material.

10. A magazine strip according to Claim 9, **characterised in that** it is produced from a plastics material in an injection-moulding process.

11. A magazine strip according to Claims 1 to 7, **characterised in that** it is produced from sheet metal.

12. A magazine strip according to Claims 1 to 11, **characterised in that** at its rear end in the direction of insertion into a setting implement the strip-like mounting part (3) has deflectable webs (4) on one or on both longitudinal boundaries (10,11).

13. A magazine strip according to Claim 12, **characterised in that** a bending notch (13) is formed between the mounting part (3) and the web (4) on the underside of the magazine strip (1), wherein the thickness (D3) of the remaining connecting material corresponds approximately to 0.1 to 0.2 times the thickness (D) of the mounting part (3).

14. A magazine strip according to Claim 11, **characterised in that** the bending notch (13) formed between the mounting part (3) and the web (4) on the underside of the magazine strip has an opening angle (W) of approximately 130°.

## Revendications

1. Bande d'approvisionnement (1) pour le maintien d'éléments de fixation, en particulier de vis, lors du stockage et lors du transport et pour l'acheminement ordonné de ceux-ci vers un appareil de pose, se composant d'une pièce de réception (3) de type « bande » comportant des ouvertures (2) se succédant dans sa direction longitudinale pour l'introduction des éléments de fixation, des languettes repliables (6) étant formées par plusieurs fentes (5) s'écartant dans le sens radial de ces ouvertures (2) qui permettent de presser au travers de la pièce de réception (3) l'élément de fixation lors de son prélèvement hors de la bande d'approvisionnement (1),
**caractérisée en ce que**
les languettes (6) formées par des fentes (5) s'écartant dans le sens radial des ouvertures (2), en leurs extrémités (7) libres dirigées vers l'ouverture (2), sont plus fines que la pièce de réception (3) de type « bande ».

2. Bande d'approvisionnement selon la revendication 1,
**caractérisée en ce que**
les languettes (6), en partant de la pièce de réception (3) de type « bande », en direction de leur extrémité libre (7), donc en direction de l'ouverture (2) à chaque fois associée, sont réalisées de plus en plus minces en continu.

3. Bande d'approvisionnement selon les revendications 1 et 2,
**caractérisée en ce que**
l'épaisseur (D1, D2) de l'extrémité libre (7) des languettes (6) est la plus grande en une extrémité de la pièce de réception (3) en forme de bande et diminue en direction de l'autre extrémité de la pièce de réception (3).

4. Bande d'approvisionnement selon la revendication 3,
**caractérisée en ce que**
l'épaisseur (D1, D2) de l'extrémité libre (7) des languettes (6) est réalisée de façon à être égale ou inférieure à la demi-épaisseur (D) de la pièce de réception (3).

5. Bande d'approvisionnement selon la revendication 1,
**caractérisée en ce que**
la largeur des fentes (5) augmente constamment en partant des ouvertures (2) en direction de leur extrémité.

6. Bande d'approvisionnement selon la revendication 5,
**caractérisée en ce que**
les extrémités figurant à l'extérieur dans le sens radial des fentes (5) présentent une terminaison (8) en forme d'arc.

7. Bande d'approvisionnement selon les revendications 1, 5 et 6,
**caractérisée en ce que**
les surfaces de délimitation (9) des fentes (5) s'étendent en étant inclinées à angle aigu, si bien que la largeur des fentes (5) augmente en partant du côté supérieur de la pièce de réception (3) vers le côté inférieur de la pièce de réception (3).

8. Bande d'approvisionnement selon l'une quelconque des revendications 1 à 7,
**caractérisée en ce que**
celle-ci est fabriquée à partir de carton.

9. Bande d'approvisionnement selon l'une quelconque des revendications 1 à 7,
**caractérisée en ce que**
celle-ci est fabriquée à partir d'un matériau synthétique.

10. Bande d'approvisionnement selon la revendication 9,
**caractérisée en ce que**
celle-ci est fabriquée en un matériau synthétique par un procédé de moulage par injection.

11. Bande d'approvisionnement selon l'une quelconque des revendications 1 à 7,
**caractérisée en ce que**
celle-ci est fabriquée à partir d'une tôle.

12. Bande d'approvisionnement selon l'une quelconque des revendications 1 à 11,
**caractérisée en ce que**
la pièce de réception (3) en forme de bande présente des ailettes (4) repliables en leur extrémité (12) dirigée vers l'arrière par rapport à la direction d'introduction dans un appareil de pose, sur une ou sur les deux délimitations longitudinales (10, 11).

13. Bande d'approvisionnement selon la revendication 12,
**caractérisée en ce qu'**
entre la pièce de réception (3) et l'ailette (4), une entaille de pliage (13) est constituée sur le côté inférieur de la bande d'approvisionnement (1), l'épaisseur (D3) du matériau de liaison restant correspondant environ à 0,1 à 0,2 fois l'épaisseur (D) de la pièce de réception (3).

14. Bande d'approvisionnement selon la revendication 11,
**caractérisée en ce que**
l'entaille de pliage (13) formée sur le côté inférieur de la bande d'approvisionnement entre la pièce de réception (3) et l'ailette (4) présente un angle d'ouverture (W) d'environ 130 °.
